# EUROPÄISCHE PATENTSCHRIFT

(11) **EP 3 099 905 B1**
(45) Veröffentlichungstag und Bekanntmachung des Hinweises auf die Patenterteilung: **17.05.2017**
(21) Anmeldenummer: 15700174.4
(22) Anmeldetag: 13.01.2015
(51) Int. Cl.: F01N 3/10, F01N 3/20, F01N 13/00, F01N 9/00, F02D 41/02

(54) **VERFAHREN ZUR TEMPERATUREINSTELLUNG EINER ABGASNACHBEHANDLUNGSEINRICHTUNG**
METHOD FOR SETTING THE TEMPERATURE OF AN EXHAUST GAS AFTERTREATMENT DEVICE
PROCÉDÉ D'AJUSTEMENT DE LA TEMPÉRATURE D'UN DISPOSITIF DE RETRAITEMENT DE GAZ D'ÉCHAPPEMENT

(30) Priorität: 01.02.2014 DE 102014001418
(43) Veröffentlichungstag der Anmeldung: 07.12.2016
(73) Patentinhaber: Daimler AG, 70327 Stuttgart (DE)
(72) Erfinder: BALTHES, Ortwin, 74343 Sachsenheim (DE); KEPPELER, Berthold, 73277 Owen (DE); MÜLLER, Siegfried, 74379 Ingersheim (DE); WOOG, Thorsten, 70372 Stuttgart (DE)
(74) Vertreter: JENSEN & SON
(86) Internationale Anmeldenummer: PCT/EP2015/000041
(87) Internationale Veröffentlichungsnummer: WO 2015/113732

(56) Entgegenhaltungen:
- DE-A1-102005 013 707
- US-A1- 2012 324 868

## Beschreibung

Die Erfindung betrifft ein Verfahren zur Temperatureinstellung einer an eine Brennkraftmaschine angeschlossenen Abgasnachbehandlungseinrichtung nach dem Oberbegriff des Anspruchs 1.

Aus der DE 10 2005 013 707 A1 ist ein Verfahren zur Temperatureinstellung einer an eine Brennkraftmaschine angeschlossenen Abgasnachbehandlungseinrichtung umfassend ein elektrisches Heizelement, einen dem Heizelement nachgeschalteten Oxidationskatalysator sowie einen dem Oxidationskatalysator nachgeschalteten SCR-Katalysator bekannt, bei welchem nach einem Start der Brennkraftmaschine das Heizelement bestromt wird und im Anschluss daran eine Anreicherung des Abgases mit brennbaren Bestandteilen stromauf des Oxidationskatalysators vorgenommen wird. Die Anreicherung des Abgases mit brennbaren Bestandteilen kann dabei durch eine entsprechende Einstellung von Einspritzparametern von Kraftstoffeinspritzvorgängen insbesondere dann vorgenommen werden, wenn der Oxidationskatalysator eine vorgebbare Temperaturschwelle überschritten hat. Ebenso kann die Heizleistung des Heizelements in Abhängigkeit von Temperaturen der Katalysatoren eingestellt werden. Auf diese Weise ist beispielsweise bei einem Kaltstart der Brennkraftmaschine ein rasches Erwärmen der Katalysatoren auf deren Betriebstemperatur ermöglicht.

Aufgabe der Erfindung ist es, ein weiter verbessertes Verfahren zur Temperatureinstellung einer dementsprechenden Abgasnachbehandlungseinrichtung anzugeben.

Diese Aufgabe wird durch ein Verfahren mit den Merkmalen des Anspruchs 1 gelöst.

Bei dem Verfahren werden Temperaturwerte für eine aktuelle Temperatur des Oxidationskatalysators und des SCR-Katalysators laufend ermittelt und abhängig von den ermittelten Temperaturwerten Einspritzparameter von Einspritzvorgängen für Kraftstoffeinspritzungen in Brennräume der Brennkraftmaschine und eine Heizleistung des Heizelements eingestellt. Dabei werden dem Oxidationskatalysator und dem SCR-Katalysator jeweils ein einer vorgebbaren Umsatzschwelle zugeordneter charakteristischer Temperaturwert zugeordnet. Erfindungsgemäß werden dem Oxidationskatalysator ein erster charakteristischer Temperaturwert für einen oxidativen Kohlenmonoxidumsatz und ein zweiter charakteristischer Temperaturwert für einen oxidativen Kohlenwasserstoffumsatz und dem SCR-Katalysator ein dritter charakteristischer Temperaturwert für einen reduktiven Stickoxid-Umsatz zugeordnet, wobei bei Erreichen des ersten und des zweiten charakteristischen Temperaturwerts für die Temperatur des Oxidationskatalysators und bei Erreichen des dritten charakteristischen Temperaturwerts für die Temperatur des SCR-Katalysators jeweils unterschiedliche Werte für die Einspritzparameter und/oder die Heizleistung des Heizelements eingestellt werden. Dadurch wird der Erkenntnis Rechnung getragen, dass ein bestimmtes Ausmaß der katalytischen Aktivität der Katalysatoren für unterschiedliche Arten von katalysierten Umsetzungen bei unterschiedlichen Temperaturen erreicht wird. Aufgrund der erfindungsgemäßen Vorgehensweise ist daher mit Blick auf diese Umsetzungen ein besonders wirksames Thermomanagement der Abgasnachbehandlungseinrichtung ermöglicht. Die Katalysatoren können ausgehend von tiefen Temperaturen einerseits besonders rasch und effizient auf ihre jeweilige Betriebstemperatur gebracht und andererseits bei ungünstigen Betriebsbedingungen besonders effizient vor einem Abkühlen unter ihre jeweilige Betriebstemperatur bewahrt werden.

Durch eine Einstellung von Einspritzparametern für die Kraftstoffeinspritzung in Abhängigkeit von den entsprechenden charakteristischen Temperaturwerten für das insbesondere bei niedrigen Temperaturen unterschiedliche Kohlenmonoxid- und Kohlenwasserstoff-Umsatzvermögen des Oxidationskatalysators können daher Anteile von Kohlenmonoxid (CO) und Kohlenwasserstoff (HC) im Abgas bereitgestellt werden, die im Sinne einer effektiven Wärmefreisetzung infolge von deren Oxidation optimiert sind. Darauf abgestimmt kann wiederum die Heizleistung des Heizelements so eingestellt werden, dass eine effizienzoptimierte Aufteilung der am Oxidationskatalysator und durch das Heizelement freigesetzten Wärmeleistungen ermöglicht ist. Darüber hinaus ist es ermöglicht, durch eine gegebenenfalls veränderte Einstellung der Einspritzparameter in zusätzlicher Abhängigkeit von den für eine vorgebbare Umsatzschwelle von beispielsweise 50 % maßgebenden dritten charakteristischen Temperaturwert für die Temperatur des SCR-Katalysators ein rasches Erreichen von dessen katalytischer Wirksamkeit in Bezug auf einen reduktiven Umsatz von Stickoxiden (NOx) zu erzielen und ein Absinken unter diesen Temperaturwert zu vermeiden.

In Ausgestaltung des Verfahrens ist für den ersten charakteristischen Temperaturwert für einen oxidativen Kohlenmonoxidumsatz des Oxidationskatalysators ein niedrigerer Wert als für den zweiten charakteristischen Temperaturwert für dessen oxidativen Kohlenwasserstoffumsatz vorgesehen. Dadurch wird der Erkenntnis Rechnung getragen, dass der Oxidationskatalysator einen vorgebbaren Wert von beispielsweise 50 % für einen katalytisierten oxidativen Umsatz von Kohlenmonoxid typischerweise bei niedrigeren Temperaturen als für einen ebenso großen katalytisierten oxidativen Umsatz von Kohlenwasserstoff erreicht.

In weiterer Ausgestaltung des Verfahrens sind für den ersten charakteristischen Temperaturwert und/oder für den zweiten charakteristischen Temperaturwert und/oder für den dritten charakteristischen Temperaturwert jeweils für zunehmende Temperaturen höhere Werte als für abnehmende Temperaturen vorgesehen. Die Erfinder haben überraschend festgestellt, dass in Bezug auf ein bestimmtes Umsatzvermögen von beispielsweise 50 % eine Temperaturhysterese derart auftritt, dass bei zunehmender Temperatur ein Anspringen der katalytischen Aktivität (sog. Light-off) bei einer höheren Temperatur des jeweiligen Katalysators erfolgt, als ein Verlöschen der katalytischen Aktivität bei abnehmender Temperatur (sog. Light-out). Die erfindungsgemäße Berücksichtigung dieses Phänomens bei den vorgesehenen Maßnahmen für ein Thermomanagement - Betrieb des Heizelements und/oder Veränderung der Einspritzparameter - ermöglicht daher einen effizienteren Energieeinsatz.

In weiterer Ausgestaltung des Verfahrens werden ein Alterungszustand des Oxidationskatalysators und/oder des SCR-Katalysators ermittelt und der erste und/oder der zweite und/oder der dritte charakteristische Temperaturwert werden in Abhängigkeit vom jeweils ermittelten Alterungszustand verändert. Auf diese Weise können alterungsbedingte Verschlechterungen der katalytischen Aktivität der Katalysatoren insbesondere beim Betrieb des elektrischen Heizelements berücksichtigt und weitestgehend kompensiert werden. Ein jeweiliger Alterungszustand kann beispielsweise von Zeit zu Zeit durch Ermittlung von aktuellen Umsatzwerten und Vergleich mit hinterlegten Umsatzvergleichswerten ermittelt werden. Es kann auch eine Erfassung der thermischen Belastung der Katalysatoren und deren Berücksichtigung in einem Alterungsfaktor erfolgen.

In weiterer Ausgestaltung des Verfahrens werden zur Beheizung des Oxidationskatalysators und/oder des SCR-Katalysators eine erste Heizleistung infolge eines Betriebs des Heizelements, abhängig von den eingestellten Einspritzparametern eine zweite Heizleistung infolge einer Spätverlagerung von in den Brennräumen der Brennkraftmaschine verbranntem Kraftstoff und eine dritte Heizleistung infolge einer Nachverbrennung von unvollständig verbrannt von der Brennkraftmaschine abgegebenem Kraftstoff am Oxidationskatalysator freigesetzt, wobei ein relativer Anteil einer jeweiligen Heizleistung an einer durch die freigesetzten Heizleistungen bestimmten Gesamtheizleistung in Abhängigkeit von den ermittelten Temperaturwerten und dem ersten charakteristischen Temperaturwert und/oder dem zweiten charakteristischen Temperaturwert und/oder dem dritten charakteristischen Temperaturwert eingestellt wird. Dies ermöglicht ein besonders effizientes Thermomanagement der Katalysatoren.

Es konnte festgestellt werden, dass dies im besonderen Maße dann der Fall ist, wenn in weiterer Ausgestaltung der Erfindung die Gesamtheizleistung nur durch die erste Heizleistung und die zweite Heizleistung aufgebracht werden, wenn für die aktuelle Temperatur des Oxidationskatalysators Temperaturwerte unterhalb des ersten charakteristischen Temperaturwerts ermittelt werden. Weiterhin hat es sich als besonders wirksam herausgestellt, wenn als relativer Anteil der ersten Heizleistung etwa 50 % eingestellt werden, wenn für die aktuelle Temperatur des Oxidationskatalysators Temperaturwerte unterhalb des ersten charakteristischen Temperaturwerts ermittelt werden.

Weiterhin ist es besonders vorteilhaft, wenn in weiterer Ausgestaltung der Erfindung als relativer Anteil der ersten Heizleistung weniger als etwa 30 % eingestellt werden, wenn für die aktuelle Temperatur des Oxidationskatalysators Temperaturwerte oberhalb des ersten charakteristischen Temperaturwerts und für die aktuelle Temperatur des SCR-Katalysators Temperaturwerte unterhalb des dritten charakteristischen Temperaturwerts ermittelt werden.

Schließlich hat es sich als besonders vorteilhaft erwiesen, wenn in weiterer Ausgestaltung der Erfindung bei ermittelten Temperaturwerten unterhalb des ersten charakteristischen Temperaturwerts für die aktuelle Temperatur des Oxidationskatalysators die Gesamtheizleistung niedriger eingestellt wird als bei ermittelten Temperaturwerten für den Oxidationskatalysator oberhalb des zweiten charakteristischen Temperaturwerts und bei ermittelten Temperaturwerten für den SCR-Katalysator unterhalb des dritten charakteristischen Temperaturwerts.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: ein schematisches Blockbild einer Abgasnachbehandlungseinrichtung einer Brennkraftmaschine,
- Fig. 2: schematische Temperatur-Umsatzkennlinien für eine Temperaturabhängigkeit von Umsatzgraden eines Katalysators der Abgasnachbehandlungseinrichtung gemäß Fig. 1,
- Fig. 3: eine schematisch dargestellte Temperaturhysterese für eine Temperaturabhängigkeit eines katalytischen Umsatzes bei steigenden und fallenden Temperaturen,
- Fig. 4: ein Diagramm mit schematisch dargestellten zeitlichen Verläufen für eine Aufwärmung des Oxidationskatalysators und des SCR-Katalysators der Abgasnachbehandlungseinrichtung gemäß Fig. 1,
- Fig. 5: ein Diagramm mit einem schematisch dargestellten zeitlichen Verlauf für eine freigesetzte Gesamtheizleistung zur Erwärmung der Abgasnachbehandlungseinrichtung gemäß Fig. 1,
- Fig. 6: ein Diagramm mit schematisch dargestellten zeitlichen Verläufen von Heizleistungen einer jeweiligen Heizmassnahme in Bezug auf die freigesetzte Gesamtheizleistung gemäß Fig. 5 und
- Fig. 7: ein Diagramm mit schematisch dargestellten zeitlichen Temperaturverläufen mit und ohne Betrieb des elektrischen Heizelements der Abgasnachbehandlungseinrichtung gemäß Fig. 1.

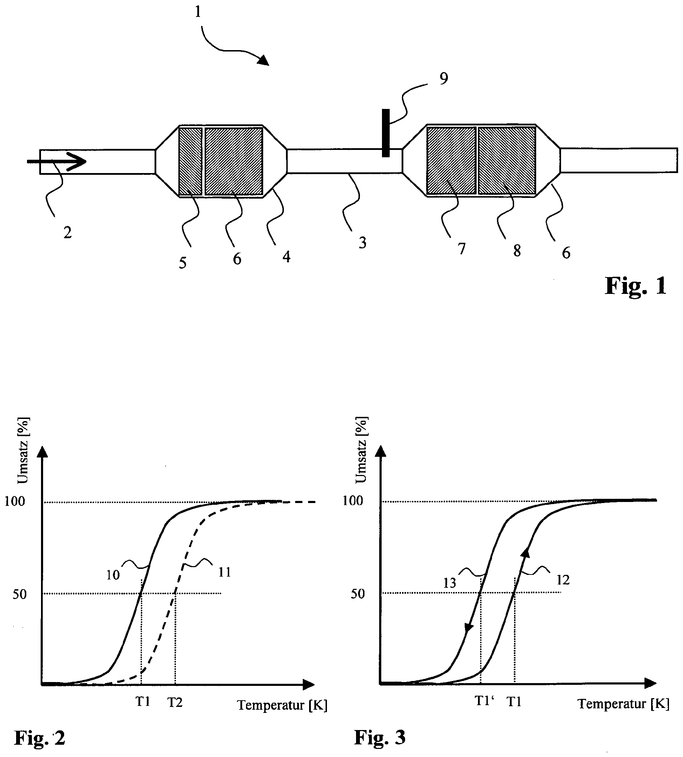

Fig. 1 zeigt lediglich grob schematisch eine Abgasnachbehandlungseinrichtung 1, die an eine nicht dargestellte Brennkraftmaschine eines Kraftfahrzeugs angeschlossen ist. Die Brennkraftmaschine ist vorliegend als kompressionsgezündeter, direkteinspritzender Dieselmotor ausgeführt. Eine Ausführung als insbesondere magerlauffähiger fremdgezündeter Ottomotor ist jedoch ebenfalls möglich. Abgas der Brennkraftmaschine strömt entsprechend einer durch einen Pfeil 2 gekennzeichneten Strömungsrichtung in eine Abgasleitung 3. In der Abgasleitung 3 sind in der Abgasströmungsrichtung hintereinander ein elektrisches Heizelement 5, ein Oxidationskatalysator 6, ein Partikelfilter 7 und ein SCR-Katalysator 8 angeordnet. Ferner ist eine Zugabevorrichtung 9 für ein in Bezug auf eine Stickoxidreduktion selektives Reduktionsmittel, insbesondere wässrige Harnstofflösung, vorgesehen. Die Zugabevorrichtung 9 ist vorliegend eingangsseitig des Partikelfilters 7 angeordnet. Dies ist für den vorliegend betrachteten Fall eines mit einer SCR-Katalysatorbeschichtung versehenen Partikelfilters 7 besonders vorteilhaft. Im Falle eines Partikelfilters 7 ohne eine solche Beschichtung ist eine Anordnung der Zugabevorrichtung 9 zwischen dem Partikelfilter 7 und dem SCR-Katalysator 8 vorgesehen.

Das elektrische Heizelement 5 ist dem Oxidationskatalysator 6 unmittelbar vorgeschaltet und mit diesem in einem gemeinsamen Gehäuse 4 angeordnet. Der Partikelfilter 7 und der SCR-Katalysator 8 sind vorliegend ebenfalls in einem, mit dem Bezugszeichen 6 bezeichneten gemeinsamen Gehäuse angeordnet. Eine Anordnung in separaten Gehäusen ist aber ebenfalls möglich.

Der Oxidationskatalysator 6 ist bevorzugt als so genannter Diesel-Oxidationskatalysator in Wabenkörperbauweise ausgebildet. Eine vorgesehene oxidationskatalytische Beschichtung der Strömungskanäle kann dabei zusätzlich eine Drei-Wege-Katalysator-Funktion aufweisen. Der Oxidationskatalysator 6 kann als Träger einen Keramikkörper oder einen Metallfolien-Trägerkörper aufweisen. Das elektrische Heizelement ist bevorzugt als Metallfolien-Trägerkörper (so genannter E-Kat) ausgebildet, welcher ebenfalls eine oxidationskatalytische Beschichtung aufweisen kann.

Der Partikelfilter 7 ist bevorzugt als Filtereinheit in Wabenkörperbauweise ausgebildet. Vorzugsweise ist für den Partikelfilter 7 eine katalytische Beschichtung, insbesondere mit einem SCR-Katalysatormaterial vorgesehen. Das SCR-Katalysatormaterial kann unter oxidierenden Bedingungen eine selektive, kontinuierliche Reduktion von NOx mittels eingespeichertem und/oder zugeführtem Ammoniak (NH3) als selektivem NOx-Reduktionsmittel katalysieren. Bevorzugt als Katalysatormaterial ist ein Eisen oder Kupfer enthaltender Zeolith. Das SCR-Katalysatormaterial kann dabei auf der Rohgasseite und/oder auf der Reingasseite der filterwirksamen Flächen des Partikelfilters 7 vorgesehen sein. Bei der bevorzugten Ausführung des Partikelfilters 7 als wanddurchströmter Filter in Wabenkörperbauweise ist die Beschichtung mit dem entsprechenden SCR-Katalysatormaterial bevorzugt auf den rohgasexponierten Kanalwänden vorgesehen. Insbesondere in diesem Fall kann es vorteilhaft sein, die SCR-Katalysatorbeschichtung lediglich abschnittsweise eintrittsseitig oder austrittsseitig auf den porösen Kanalwänden des Partikelfilters 7 vorzusehen.

Der stromab des Partikelfilters 7 vorgesehene SCR-Katalysator 8 ist bevorzugt ebenfalls als beschichteter Wabenkörper ausgebildet. Die Beschichtung ist analog zur SCR-Katalysatormaterialbeschichtung des Partikelfilters 7 zur selektiven Reduktion von NOx mit NH3 befähigt. Dabei ist eine Ausführungsform mit Speicherfähigkeit für NH3 bevorzugt. Um eine Abgabe von NH3 an die Umgebung, beispielsweise infolge einer thermischen Desorption oder infolge von beladungsbedingtem Schlupf zu verhindern, kann stromab vom SCR-Katalysatoreinheit 8 ein weiterer Oxidationskatalysator als so genannter Sperr-Katalysator vorgesehen sein, was nicht gesondert dargestellt ist.

Für einen Betrieb des Dieselmotors und der Abgasnachbehandlungseinrichtung 1 sind verschiedene Sensoren in der Abgasleitung 3 vorgesehen, was der Übersichtlichkeit halber nicht näher dargestellt ist. Vorgesehen sind insbesondere Temperatursensoren, welche Temperaturwerte für das Heizelement 5, den Oxidationskatalysator 6, den Partikelfilter 7 und den SCR-Katalysator 8 direkt erfassen können. Es können jedoch auch Temperatursensoren vorgesehen sein, welche mit den Temperaturen dieser Komponenten korrelierende Temperaturwerte erfassen können, aus denen die aktuellen Temperaturen dieser Komponenten ermittelt werden können.

Die Signale der vorhandenen Sensoren sind von einem nicht dargestellten Steuergerät verarbeitbar, welches anhand der Signale und gespeicherten Kennlinien und Kennfelder Betriebszustände des Dieselmotors ermitteln und durch Ansteuerung von Stellgliedern gesteuert und/oder geregelt einstellen kann. Insbesondere sind Kraftstoffeinspritzparameter wie Anzahl der Kraftstoffeinspritzungen je Arbeitszyklus sowie deren Einspritzdruck, -Dauer und -Zeitpunkt einstellbar. Weiterhin ist vorzugsweise mittels des Steuergeräts eine dem Heizelement 5 zugeführte elektrische Heizleistung gesteuert oder geregelt einstellbar.

Nachfolgend wird unter Bezug auf die weiteren Figuren 2 bis 7 ein Verfahren zum Betrieb des Dieselmotors und des Heizelements 5 zur Temperatureinstellung der Abgasnachbehandlungseinrichtung 1 näher erläutert. Ziel des Verfahrens ist es, die katalytisch aktiven Komponenten der Abgasnachbehandlungseinrichtung 1 ausgehend von niedrigen Temperaturen auf deren Betriebstemperatur zu bringen bzw. auf Betriebstemperatur zu halten. Zur Erläuterung der dabei maßgebenden Temperaturverhältnisse wird zunächst auf ein in Fig. 2 dargestelltes Diagramm Bezug genommen.

Im Diagramm von Fig. 2 sind schematisch katalytische Umsatzgrade des Oxidationskatalysators 6 in Abhängigkeit von dessen Temperatur dargestellt. Dabei gibt eine Kurve 10 einen Temperaturverlauf eines oxidativen Kohlenmonoxidumsatzes und eine Kurve 11 einen Temperaturverlauf eines oxidativen Kohlenwasserstoffumsatzes wieder. Wie dargestellt, sind die Umsatzgrade aufgrund fehlender katalytischer Aktivität bei niedrigen Temperaturen gering. Mit zunehmender Temperatur beginnen die Umsatzgrade ebenfalls zuzunehmen und erreichen bei hohen Temperaturen Werte von 100 %. Bei einer charakteristischen ersten Temperatur T1 bzw. einer charakteristischen zweiten Temperatur T2 werden Umsatzgrade von 50 % für einen Kohlenmonoxid- bzw. Kohlenwasserstoffumsatz erreicht. Lediglich beispielhaft wird nachfolgend davon ausgegangen, dass oberhalb dieser charakteristischen Temperaturen T1, T2 der Oxidationskatalysator 6 seine Betriebstemperatur in Bezug auf einen oxidativen Kohlenmonoxidumsatz bzw. Kohlenwasserstoffumsatz aufweist. Es versteht sich, dass für eine Definition der Betriebstemperatur prinzipiell andere Werte für den Umsatzgrad wie beispielsweise 80 % herangezogen werden können, wodurch sich entsprechend höhere charakteristische Temperaturen T1, T2 ergeben, was jedoch an den prinzipiellen Verhältnissen nichts ändert. Vorliegend sind die charakteristischen Temperaturwerte T1, T2 einer Umsatzschwelle zugeordnet, welche lediglich exemplarisch mit 50 % vorgegeben ist.

Wie dem Diagramm von Fig. 2 entnommen werden kann, ist vorliegend die erste charakteristische Temperatur T1 für einen oxidativen Kohlenmonoxidumsatz niedriger als die zweite charakteristische Temperatur T2 für einen oxidativen Kohlenwasserstoffumsatz. Die Erfinder haben festgestellt, dass ein solches Verhalten als typisch für einen hier vorzugsweise in Betracht kommenden Dieseloxidationskatalysator ist. Je nach Ausführung und Alterungszustand des Oxidationskatalysators 6 sind Werte von etwa 130 °C bis 180 °C für die erste charakteristische Temperatur T1 und Werte von etwa 160 °C bis 210 °C für die zweite charakteristische Temperatur T2 als typisch anzusehen.

Vorzugsweise sind die im Diagramm von Fig. 2 dargestellten, für den Oxidationskatalysator maßgebenden Kennlinien im Steuergerät des Motors abgespeichert. In analoger Weise sind Temperatur-Umsatzkennlinien für einen reduktiven NOx-Umsatz des SCR-Katalysators 8 und für die für den Partikelfilter 7 vorgesehene SCR-Katalysatorbeschichtung vorgesehen. Dabei wird nachfolgend eine einer vorgebbaren NOx-Umsatzschwelle des SCR-Katalysators 8 von beispielhaft 50 % zugeordnete Temperatur als dritter charakteristischer Temperaturwert T3 bezeichnet. Je nach Ausführung und Alterungszustand des SCR-Katalysators 8 sind für diesen Werte von etwa 170 °C bis 210 °C als typisch anzusehen. Auf die Darstellung der entsprechenden Kennlinie in einem gesonderten Diagramm wurde zur Vermeidung von Weitläufigkeiten verzichtet.

Wie von den Erfindern festgestellt werden konnte, sind die einer jeweiligen vorgebbaren Umsatzschwelle zuordenbaren charakteristischen Temperaturwerte T1, T2, T3 jedoch verschieden, je nachdem ob ansteigende oder abfallende Temperaturen vorherrschen. In dem im Fig. 3 dargestellten Diagramm ist dies beispielhaft für den oxidativen Kohlenmonoxidumsatz des Oxidationskatalysators 6 durch eine Temperaturhysterese mit einem ersten Kurvenast 12 für ansteigende Temperaturen und einem zweiten Kurvenast 13 für abnehmende Temperaturen veranschaulicht. Nachfolgend wird, wie im Diagramm von Fig. 3 dargestellt, der einer vorgebbaren Umsatzschwelle von beispielshaft 50 % zugeordnete erste charakteristische Temperaturwert für den oxidativen Kohlenmonoxidumsatz für ansteigende Temperaturen analog zum Diagramm von Fig. 2 mit T1 bezeichnet. Der erste charakteristische Temperaturwert für den oxidativen Kohlenmonoxidumsatz für abnehmende Temperaturen wird mit T1' bezeichnet. Dementsprechend werden nachfolgend der zweite charakteristische Temperaturwert für einen oxidativen Kohlenwasserstoffumsatz des Oxidationskatalysators 6 mit T2 für den Fall steigender Temperaturen und mit T2' für den Fall sinkender Temperaturen bezeichnet. Analog werden nachfolgend der dritte charakteristische Temperaturwert für einen reduktiven Stickoxidumsatz des SCR-Katalysators 8 bzw. der SCR-Katalysatorbeschichtung des Partikelfilters 7 mit T3 für den Fall steigender Temperaturen und mit T3' für den Fall sinkender Temperaturen bezeichnet.

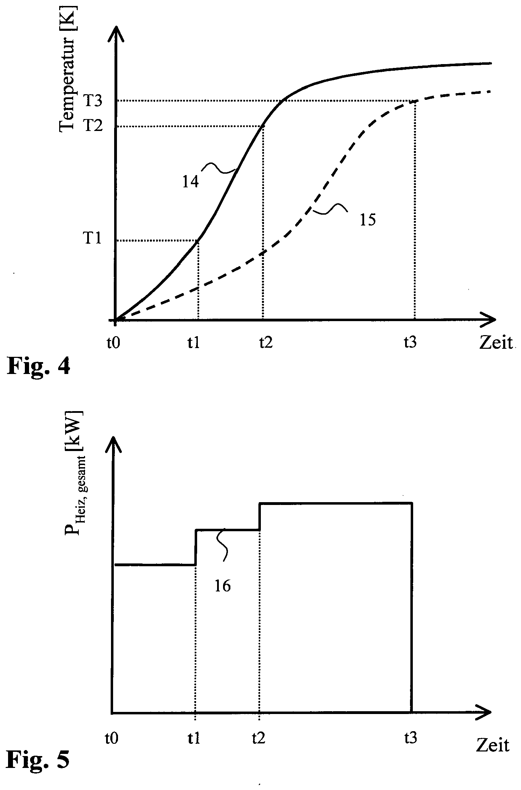

Nachfolgend werden vorteilhafte Maßnahmen für ein Thermomanagement der katalytisch wirksamen Komponenten der Abgasnachbehandlungseinrichtung 1 erläutert. Dabei wird unter Bezug auf ein in Fig. 4 gezeigtes Zeitdiagramm beispielhaft auf den Fall eines Warmlaufs des Dieselmotors eingegangen, bei welchem der Oxidationskatalysator 6 und der SCR-Katalysator 8 zunächst Temperaturen unterhalb ihrer jeweiligen Betriebstemperatur aufweisen.

Im Zeitdiagramm von Fig. 4 sind schematisch zeitliche Verläufe für eine Aufwärmung des Oxidationskatalysators 6 und des SCR-Katalysators 8 aufgetragen. Dabei ist durch eine Kurve 14 ein Temperaturverlauf des Oxidationskatalysators 6 und durch eine Kurve 15 ein Aufheizverlauf des SCR-Katalysators 8 veranschaulicht. Da der SCR-Katalysator 8 motorferner als der Oxidationskatalysator 6 in der Abgasnachbehandlungseinrichtung 1 angeordnet ist, erfolgt wie dargestellt eine Erwärmung des SCR-Katalysators 8 später und typischerweise langsamer als die des Oxidationskatalysators 6.

Um eine rasche Aufwärmung zu erreichen, werden, aufgeteilt auf nacheinander ablaufende Phasen, unterschiedliche Maßnahmen ergriffen. Ausgehend von einem beim Zeitpunkt t0 erfolgenden Motorstart, wird zunächst in einer ersten Phase das elektrische Heizelement 5 bestromt und die Kraftstoffeinspritzparameter des Dieselmotors im Vergleich zu einer verbrauchsoptimalen Einstellung so verändert, dass eine Spätverlagerung des Verbrennungsschwerpunkts resultiert. Dabei ist unter der Lage des Verbrennungsschwerpunkts die Stellung der Kolben des Dieselmotors, gemessen in Grad Kurbelwinkel (° KW) in Bezug auf den oberen Totpunkt (oT) im Verbrennungstakt zu verstehen, bei welchem 50 % der insbesondere mit der Haupteinspritzung drehmomentwirksam in den jeweiligen Zylinder eingespritzten Kraftstoffmenge verbrannt ist. Hierzu wird ein Einspritzbeginn für eine Kraftstoffhaupteinspritzung auf einige Grade nach dem oberen Totpunkt des Kompressionstakts verlegt. Typische Werte für den Beginn der Haupteinspritzung sind etwa 2 °KWnOT bis etwa 10 °KWnOT. Dabei wird zugleich die Kraftstoffeinspritzmenge auf zwei unmittelbar nacheinander erfolgende Einspritzungen, nämlich eine erste Haupteinspritzung und eine daran angelagerte mitbrennende Nacheinspritzung aufgeteilt. Auf diese Weise wird der Verbrennungsschwerpunkt in einen Bereich von vorzugsweise 20 °KWnOT bis 50 °KWnOT verlegt. Dabei erfolgt vorzugsweise eine wenigstens annähernd vollständige Verbrennung des eingespritzten Kraftstoffs in den Brennräumen des Dieselmotors. Demgemäß sind die Emissionen von Kohlenmonoxid und Kohlenwasserstoffen sehr gering.

Eine infolge der Bestromung des elektrischen Heizelements von diesem abgegebene Heizleistung wird nachfolgend als erste Heizleistung P1 bezeichnet. Durch die Spätverlagerung des Verbrennungsschwerpunkts wird der mechanische Wirkungsgrad des Dieselmotors im Vergleich zu einem verbrauchsoptimalem Betrieb verschlechtert und das abgegebene Abgas weist eine entsprechend erhöhte Temperatur auf. Nachfolgend wird eine dadurch im Vergleich zu einem verbrauchsoptimalen Betrieb des Dieselmotors zusätzlich abgegebene Heizleistung als zweite Heizleistung P2 bezeichnet.

Die vorgenannten, ab dem Motorstart ergriffenen Maßnahmen bleiben aufrechterhalten, bis der Oxidationskatalysator 6 zum Zeitpunkt t1 eine dem ersten charakteristischen Temperaturwert T1 entsprechende Temperatur erreicht hat. Ab diesem Zeitpunkt t1 wird in einer zweiten Betriebsphase bei weiterhin nach spät verlagerter Kraftstoffhaupteinspritzung und weiterhin bestromtem elektrischen Heizelement 5 zusätzlich eine Kraftstoffnacheinspritzung zu einem derart frühen Zeitpunkt durchgeführt, dass der nacheingespritzte Kraftstoff nicht mehr vollständig, aber doch überwiegend ebenfalls in den Brennräumen des Dieselmotors so verbrennt, dass eine im Vergleich zu einem verbrauchsoptimalen Betrieb wesentlich erhöhte Kohlenmonoxidemission resultiert. Die Emission von Kohlenwasserstoffen bleibt hingegen weiterhin gering. Die entsprechende Konzentration von Kohlenwasserstoffen im Abgas ist damit mehr oder weniger deutlich geringer als die des Kohlenmonoxids. Die frühe, überwiegend mitbrennende Kraftstoffnacheinspritzung beginnt dabei typischerweise in einem Kurbelwinkelbereich von etwa 20 °KW bis etwa 40 °KW nach dem Beginn der Haupteinspritzung. Damit ergibt sich eine weiter gesteigerte vom Dieselmotor abgegebene zweite Heizleistung P2. Eine weitere Aufheizung resultiert durch eine am Oxidationskatalysator 6 erfolgende exotherme Oxidation des emittierten Kohlenmonoxids. Diese ist ermöglicht, da der Oxidationskatalysator 6 eine über dem ersten charakteristischen Temperaturwert T1 liegende Temperatur erreicht hat. Eine durch die exotherme Oxidation des hier in Form von Kohlenmonoxid vom Dieselmotor abgegebenen unvollständig verbrannten Kraftstoffs am Oxidationskatalysator 6 freigesetzte Heizleistung wird nachfolgend als dritte Heizleistung P3 bezeichnet.

Die Bedingungen der zweiten Betriebsphase bleiben bis zum Zeitpunkt t2 aufrechterhalten, an dem der Oxidationskatalysator 6 eine Temperatur erreicht hat, welche dem zweiten charakteristischem Temperaturwert T2 entspricht. Typischerweise ist zu diesem Zeitpunkt der SCR-Katalysator 8 noch unterhalb seiner Betriebstemperatur, d.h. er weist eine Temperatur unterhalb des dritten charakteristischen Temperaturwerts T3 auf. Ab dem Zeitpunkt t2 werden in einer dritten Betriebsphase die Kraftstoffeinspritzparameter dahingehend geändert, dass anstelle der frühen, mitbrennenden Kraftstoffnacheinspritzung eine späte, nicht mitbrennende Nacheinspritzung erfolgt. Typischerweise erfolgt die späte Nacheinspritzung im Bereich von 80 °KWnOT bis 160 °KWnOT. Dabei können auch mehr als eine späte Nacheinspritzung, beispielsweise zwei oder drei späte Nacheinspritzungen vorgenommen werden. Bevorzugt bleibt eine Spätverstellung des Zeitpunkts für die Haupteinspritzung aufrechterhalten, ebenso wie die Bestromung des elektrischen Heizelements 5. Infolge der weiter nach spät verlagerten Nacheinspritzung wird das Abgas mit Kohlenwasserstoffen als unverbrannten Kraftstoffbestandteilen angereichert. Die Kohlenwasserstoffe können jedoch jetzt am Oxidationskatalysator 6 exotherm oxidiert werden, weshalb die dritte Heizleistung P3 ansteigt, wohingegen die zweite Heizleistung P2 typischerweise abnimmt. Insgesamt wird eine weitere Erwärmung des Oxidationskatalysators 6 und des SCR-Katalysators 8 erreicht.

Wird zum Zeitpunkt t3 die Betriebstemperatur des SCR-Katalysators 8 erreicht, d.h. dessen charakteristischer dritter Temperaturwert T3 erreicht bzw. überschritten, so werden die Heizmaßnahmen vorzugsweise beendet. Damit werden die Einspritzparameter auf Werte für eine wenigstens annähernd verbrauchsoptimale Verbrennung umgestellt und die Bestromung des elektrischen Heizelements 5 beendet. Alternativ kann zur Stützbeheizung die Bestromung des Heizelements 5 auch noch eine vorgebbare Zeit weiter aufrechterhalten bleiben, vorzugsweise mit einer verringerten Heizleistung P1. Vorzugsweise erfolgt spätestens mit Erreichen der Betriebstemperatur des SCR-Katalysators 8 über die Zugabevorrichtung 9 eine bedarfsgerechte Dosierung von wässriger Harnstofflösung, wodurch eine weitgehende Entfernung von Stickoxiden aus dem Abgas ermöglicht ist. Die Dosierung bleibt aufrechterhalten, solange der SCR-Katalysator 8 betriebsbereit ist, d.h. eine Temperatur aufweist, welche oberhalb des dritten charakteristischen Temperaturwerts T3 bzw. T3' liegt. Eine zumindest zeitweise Dosierung von Harnstoff kann jedoch auch bei Temperaturen des SCR-Katalysators 8 unterhalb von dessen Betriebstemperatur vorgesehen sein, um im SCR-Katalysator 8 Ammoniak einzuspeichern. Hierfür kann vorgesehen sein, eine Freigabe der Dosierung bzw. einen Betrieb der Zugabevorrichtung 9 vom Vorliegen einer Mindesttemperatur von etwa 155 °C bis 185 °C an der Zugabevorrichtung 9 abhängig zu machen.

Vorzugsweise nimmt die gesamte freigesetzte Heizleistung in den nacheinander durchlaufenen Betriebsphasen zu, was durch ein in Fig. 5 dargestelltes Zeitdiagramm veranschaulicht ist. In diesem ist der zeitliche Verlauf der gesamten freigesetzten Heizleistung P_{Heiz, gesamt} = P1 + P2 + P3 schematisch dargestellt.

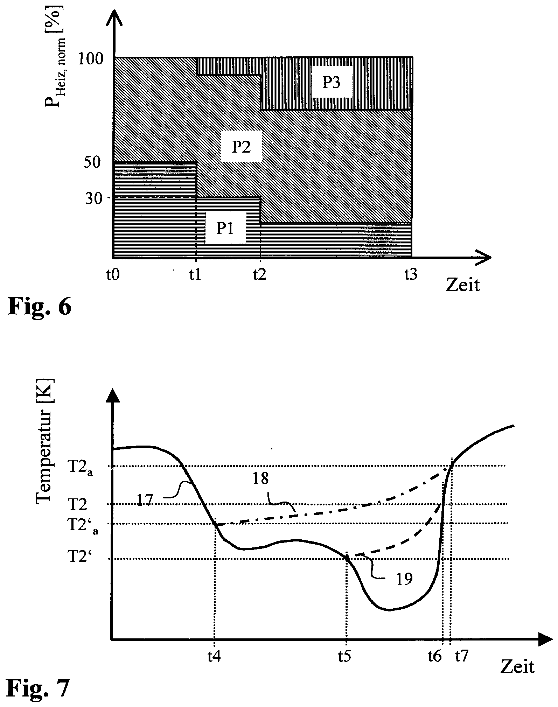

Der Beitrag einer jeweiligen Heizleistung P1, P2, P3 in den einzelnen Betriebsphasen in Relation zu der jeweils insgesamt freigesetzten Heizleistung P_{Heiz, gesamt} ist durch ein in Fig. 6 dargestelltes Diagramm veranschaulicht. In diesem sind die relativen Anteile der Heizleistungen P1, P2, P3 normiert auf die zu 100 % gesetzte, insgesamt freigesetzte Heizleistung P_{Heiz, gesamt} durch unterschiedlich markierte Flächenbereiche dargestellt. Wie dargestellt, ergeben sich durch die vorgesehene Einstellung der Einspritzparameter und die Bestromung des elektrischen Heizelements 5 nach Motorstart zum Zeitpunkt t0 bis zum Erreichen des ersten charakteristischen Temperaturwerts T1 für die Temperatur des Oxidationskatalysators 6 zum Zeitpunkt t1 etwa gleichgroße Anteile der entsprechenden Heizleistungen P1 und P2 von jeweils etwa 50 % bezogen auf die insgesamt freigesetzte Heizleistung P_{Heiz, gesamt}. In der zweiten Betriebsphase im Zeitbereich von t1 bis t2 beträgt der Anteil der ersten Heizleistung P1 vorzugsweise etwa 30 %. Der Anteil der zweiten Heizleistung P2 beträgt dann mehr als 50 %, vorzugsweise etwa 60 %. In der darauf folgenden dritten Betriebsphase bis zum Erreichen des dritten charakteristischen Temperaturwerts T3 für die Temperatur des SCR-Katalysators 8 beträgt der relative Anteil der ersten Heizleistung P1 vorzugsweise nur noch etwa 17 %, während der Anteil der dritten Heizleistung P3 etwa 25 % oder mehr beträgt.

Erfolgt ausgehend von betriebsbereitem Oxidationskatalysator 6 und betriebsbereitem SCR-Katalysator 8 eine Abkühlung der Abgasnachbehandlungseinrichtung 1 derart, dass der Oxidationskatalysator 6 und/oder der SCR-Katalysator 8 Temperaturen unterschreiten, welche dem zweiten charakteristischen Temperaturwert T2', dem ersten charakteristischen Temperaturwert T1' bzw. dem dritten charakteristischen Temperaturwert T3' entsprechen, so werden vorzugsweise die oben beschriebenen Maßnahmen sinngemäß und in einer den oben genannten Temperaturverhältnissen entsprechenden analogen Weise wieder aktiviert. Es kann jedoch auch vorgesehen sein, bei abnehmenden Temperaturen und bei einem dadurch hervorgerufenen Unterschreiten des zweiten charakteristischen Temperaturwerts T2' für die Temperatur des Oxidationskatalysators 6 zunächst nur das elektrische Heizelement 5 zu bestromen. Auf weitere Heizmaßnahmen durch Verändern der Einspritzparameter kann in diesem Fall insbesondere dann verzichtet werden, wenn die Temperatur des SCR-Katalysators 8 den dritten charakteristischen Temperaturwert T3' nicht unterschreitet.

Sinkt die Temperatur des SCR-Katalysators 8 unter den dritten charakteristischen Temperaturwert T3', so ist es vorzugsweise vorgesehen, Einspritzparameter entsprechend einer späten nichtbrennenden Nacheinspritzung einzustellen, sofern der Oxidationskatalysator 6 noch Temperaturen oberhalb des zweiten charakteristischen Temperaturwerts T2' aufweist. Zusätzlich kann der Verbrennungsschwerpunkt nach spät verlagert werden. Sinkt die Temperatur des Oxidationskatalysators 6 noch weiter ab, so dass der zweite charakteristische Temperaturwert T2' jedoch nicht der erste charakteristische Temperaturwert T1' unterschritten wird, so wird anstelle der späten, nicht mitbrennenden Nacheinspritzung auf eine frühe, mitbrennende Nacheinspritzung umgestellt. Zusätzlich wird vorzugsweise das elektrische Heizelement 5 bestromt.

Durch die beschriebene Vorgehensweise ist es ermöglicht, die Abgasnachbehandlungseinrichtung 1 rasch und effizient auf Betriebstemperatur zu bringen bzw. auf Betriebstemperatur zu halten und damit eine umfassende Abgasreinigung rasch zu erreichen bzw. auch bei ungünstigen Bedingungen aufrechtzuerhalten. Eine weitere Verbesserung kann erzielt werden, indem ein Alterungszustand des Oxidationskatalysators und/oder des SCR-Katalysators ermittelt werden und der erste und/oder der zweite und/oder der dritte charakteristische Temperaturwert in Abhängigkeit vom jeweils ermittelten Alterungszustand verändert werden. Eine Verschlechterung der Reinigungswirkung der Abgasnachbehandlungseinrichtung 1 infolge eines typischerweise im Laufe der Zeit eintretenden Ansteigens der charakteristischen Temperaturwerte kann damit vermieden werden. Es ist vorgesehen, sowohl die charakteristischen Temperaturwerte T1, T2, T3 für ansteigende Temperaturen als die charakteristischen Temperaturwerte T1', T2', T3' für fallende Temperaturen laufend oder von Zeit zu Zeit messtechnisch oder rechnerisch zu ermitteln und eine gegebenenfalls eintretende alterungsbedingte Erhöhung dieser Werte bei den zu ergreifenden Heizmaßnahmen zu berücksichtigen. Eine dementsprechende Vorgehensweise ist anhand eines in Fig. 7 dargestellten Diagramms verdeutlicht.

Im Zeitdiagramm von Fig. 7 stellt eine Kurve 17 einen zeitlichen Temperaturverlauf des Oxidationskatalysators 6 bei einem Fahrbetrieb mit einem beispielhaften Fahrzyklus dar, bei welchem auf gesonderte Maßnahmen zur Temperierung des Oxidationskatalysators 6 verzichtet wurde. Aufgrund der vorherrschenden Motorbetriebsbedingungen sinkt dabei die Temperatur des Oxidationskatalysators 6 ausgehend von Temperaturen über dem zweiten charakteristischen Temperaturwert T2 zunächst ab, um später wieder anzusteigen. Somit ist der Oxidationskatalysator 6 für einen gewissen Zeitraum zumindest in Bezug auf eine Kohlenwasserstoffoxidation katalytisch inaktiv. Dies ist durch eine Bestromung des Heizelements 5 vermeidbar, wie durch die strichpunktiert bzw. gestrichelt dargestellten Kurvenäste 18 bzw. 19 veranschaulicht ist. Dabei ist der Kurvenast 18 einem Betrieb des Heizelements 5 bei einem gealterten und der Kurvenast 19 einem Betrieb des Heizelements 5 bei einem ungealterten Oxidationskatalysator 8 zugeordnet. Hierbei sind vorliegend Verhältnisse dargestellt, bei denen der zweite charakteristische Temperaturwert für fallende Temperaturen von einer Temperatur T2' im ungealterten Zustand des Oxidationskatalysators 6 auf die mit T2'ₐ bezeichnete Temperatur im gealterten Zustand angestiegen ist. Analog ist infolge der Alterung der zweite charakteristische Temperaturwert für steigende Temperaturen von einer Temperatur T2 im ungealterten Zustand des Oxidationskatalysators 6 auf die mit T2ₐ bezeichnete Temperatur angestiegen.

Dementsprechend wird im Falle des gealterten Oxidationskatalysators 6 mit einer Bestromung des Heizelements 5 zum Zeitpunkt t4 begonnen, an dem die Temperatur T2'ₐ unterschritten wird. Die Beheizung des gealterten Oxidationskatalysators 6 mittels des elektrischen Heizelements 5 wird wieder ansteigenden Temperaturen zum Zeitpunkt t7 bei dem demgegenüber erhöhten charakteristischen Temperaturwert T2ₐ für die Temperatur des Oxidationskatalysators 6 wieder beendet. Da im Falle des ungealterten Oxidationskatalysators 6 eine katalytische Aktivität noch bei niedrigeren Temperaturen vorhanden ist, ist in diesem die Beheizung des Oxidationskatalysators 6 mittels des Heizelements lediglich für den verkürzten Zeitraum zwischen den mit t5 und t6 bezeichneten Zeitpunkten vorgesehen, bei denen der ungealterte Oxidationskatalysator 6 eine Temperatur unterhalb der charakteristischen Temperaturwerte T2 bzw. T2' aufweist. Sowohl im Falle eines ungealterten als auch im Falle eines gealterten Oxidationskatalysators 6 kann daher die Betriebsfähigkeit durch einen Heizbetrieb des elektrischen Heizelements 5 auch bei ungünstigen Motorbetriebszuständen aufrechterhalten werden. Dabei kann insbesondere dann, wenn die Temperatur des SCR-Katalysators 8 unter den dritten charakteristischen Temperaturwert T3' absinkt, zusätzlich wie weiter oben ausgeführt eine späte Nacheinspritzung von Kraftstoff vorgenommen werden und/oder der Verbrennungsschwerpunkt nach spät verlagert werden.

## Patentansprüche

1. Verfahren zur Temperatureinstellung einer an eine Brennkraftmaschine angeschlossenen Abgasnachbehandlungseinrichtung (1) umfassend ein elektrisches Heizelement (5), einen dem Heizelement (5) nachgeschalteten Oxidationskatalysator (6) sowie einen dem Oxidationskatalysator (6) nachgeschalteten SCR-Katalysator (8), wobei
- Temperaturwerte für eine aktuelle Temperatur des Oxidationskatalysators (6) und des SCR-Katalysators (8) laufend ermittelt werden,
- abhängig von den ermittelten Temperaturwerten Einspritzparameter von Einspritzvorgängen für Kraftstoffeinspritzungen in Brennräume der Brennkraftmaschine und eine Heizleistung (P1) des Heizelements (5) eingestellt werden,
- dem Oxidationskatalysator (6) und dem SCR-Katalysator (8) jeweils ein einer vorgebbaren Umsatzschwelle zugeordneter charakteristischer Temperaturwert zugeordnet wird,
**dadurch gekennzeichnet, dass**
dem Oxidationskatalysator (6) ein erster charakteristischer Temperaturwert (T1, T1') für einen oxidativen Kohlenmonoxidumsatz und ein zweiter charakteristischer Temperaturwert (T2, T2') für einen oxidativen Kohlenwasserstoffumsatz und dem SCR-Katalysator ein dritter charakteristischer Temperaturwert (T3, T3') für einen reduktiven NOx-Umsatz zugeordnet werden, wobei bei Erreichen des ersten und des zweiten charakteristischen Temperaturwerts (T1, T1', T2, T2') für die Temperatur des Oxidationskatalysators (6) und bei Erreichen des dritten charakteristischen Temperaturwerts (T3, T3') für die Temperatur des SCR-Katalysators (8) jeweils unterschiedliche Werte für die Einspritzparameter und/oder die Heizleistung (P1) eingestellt werden.

2. Verfahren nach Anspruch 1,
**dadurch gekennzeichnet, dass**
für den ersten charakteristischen Temperaturwert (T1, T1') ein niedrigerer Wert als für den zweiten charakteristischen Temperaturwert (T2, T2') vorgesehen ist.

3. Verfahren nach Anspruch 1 oder zwei,
**dadurch gekennzeichnet, dass**
für den ersten charakteristischen Temperaturwert (T1, T1') und/oder für den zweiten charakteristischen Temperaturwert (T2, T2') und/oder für den dritten charakteristischen Temperaturwert (T3, T3') jeweils für zunehmende Temperaturen höhere Werte als für abnehmende Temperaturen vorgesehen sind.

4. Verfahren nach einem der Ansprüche 1 bis 3,
**dadurch gekennzeichnet, dass**
ein Alterungszustand des Oxidationskatalysators (6) und/oder des SCR-Katalysators (8) ermittelt werden und der erste und/oder der zweite und/oder der dritte charakteristische Temperaturwert (T1, T1', T2, T2', T3, T3') in Abhängigkeit vom jeweils ermittelten Alterungszustand verändert werden.

5. Verfahren nach einem der Ansprüche 1 bis 4,
**dadurch gekennzeichnet, dass**
zur Beheizung des Oxidationskatalysators (6) und/oder des SCR-Katalysators (8) eine erste Heizleistung (P1) infolge eines Betriebs des Heizelements, abhängig von den eingestellten Einspritzparametern eine zweite Heizleistung (P2) infolge einer Spätverlagerung von in den Brennräumen der Brennkraftmaschine verbranntem Kraftstoff und eine dritte Heizleistung (P3) infolge einer Nachverbrennung von unvollständig verbrannt von der Brennkraftmaschine abgegebenem Kraftstoff am Oxidationskatalysator (6) freigesetzt werden, wobei ein relativer Anteil einer jeweiligen Heizleistung (P1, P2, P3) an einer durch die freigesetzten Heizleistungen (P1, P2, P3) bestimmten Gesamtheizleistung (P_{Heiz, gesamt}) in Abhängigkeit von den ermittelten Temperaturwerten und dem ersten charakteristischen Temperaturwert (T1, T1') und/oder dem zweiten charakteristischen Temperaturwert (T2, T2') und/oder dem dritten charakteristischen Temperaturwert eingestellt (T3, T3') wird.

6. Verfahren nach Anspruch 5,
**dadurch gekennzeichnet, dass**
die Gesamtheizleistung (P_{Heiz, gesamt}) nur durch die erste Heizleistung (P1) und die zweite Heizleistung (P2) aufgebracht werden, wenn für die aktuelle Temperatur des Oxidationskatalysators (6) Temperaturwerte unterhalb des ersten charakteristischen Temperaturwerts (T1, T1') ermittelt werden.

7. Verfahren nach Anspruch 5 oder 6,
**dadurch gekennzeichnet, dass**
als relativer Anteil der ersten Heizleistung (P1) etwa 50 % eingestellt werden, wenn für die aktuelle Temperatur des Oxidationskatalysators (6) Temperaturwerte unterhalb des ersten charakteristischen Temperaturwerts (T1, T1') ermittelt werden.

8. Verfahren nach einem der Ansprüche 5 bis 7,
**dadurch gekennzeichnet, dass**
als relativer Anteil der ersten Heizleistung (P1) weniger als etwa 30 % eingestellt werden, wenn für die aktuelle Temperatur des Oxidationskatalysators (6) Temperaturwerte oberhalb des ersten charakteristischen Temperaturwerts (T1, T1') und für die aktuelle Temperatur des SCR-Katalysators (8) Temperaturwerte unterhalb des dritten charakteristischen Temperaturwerts (T3, T3') ermittelt werden.

9. Verfahren nach einem der Ansprüche 5 bis 8,
**dadurch gekennzeichnet, dass**
bei ermittelten Temperaturwerten unterhalb des ersten charakteristischen Temperaturwerts (T1, T1') für die aktuelle Temperatur des Oxidationskatalysators (6) die Gesamtheizleistung (P_{Heiz, gesamt}) niedriger eingestellt wird als bei ermittelten Temperaturwerten für den Oxidationskatalysator (6) oberhalb des zweiten charakteristischen Temperaturwerts (t2, T2') und bei ermittelten Temperaturwerten für den SCR-Katalysator (8) unterhalb des dritten charakteristischen Temperaturwerts (T3, T3').

## Claims

1. Method for setting the temperature of an exhaust treatment device (1) connected to an internal combustion engine, the device (1) comprising an electric heating element (5), an oxidising converter (6) located downstream of the heating element (5) and an SCR converter (8) located downstream of the oxidising converter (6), wherein
- temperature values for a current temperature of the oxidising converter (6) and the SCR converter (8) are continuously detected,
- depending on the detected temperature values, injection parameters of injection processes for fuel injections into combustion chambers of the internal combustion engine and a heating power (P1) of the heating element (5) are set,
- a characteristic temperature value assigned to a presettable conversion threshold is assigned to the oxidising converter (6) and the SCR converter (8),
**characterised in that**
the oxidising converter (6) is assigned a first characteristic temperature value (T1, T1') for oxidative carbon monoxide conversion and a second characteristic temperature value (T2, T2') for oxidative hydrocarbon conversion, and the SCR converter (8) is assigned a third characteristic temperature value (T3, T3') for reductive NOx conversion, wherein, on reaching the first and the second characteristic temperature values (T1, T1', T2, T2') for the temperature of the oxidising converter (6) and on reaching the third characteristic temperature value (T3, T3') for the temperature of the SCR converter (8), different values are set for the injection parameters and/or the heating power (P1).

2. Method according to claim 1,
**characterised in that**
a lower value is provided for the first characteristic temperature value (T1, T1') than for the second characteristic temperature value (T2, T2').

3. Method according to claim 1 or 2,
**characterised in that**
for the first characteristic temperature value (T1, T1') and/or for the second characteristic temperature value (T2, T2') and/or for the third characteristic temperature value (T3, T3'), higher values are provided for increasing temperatures than for decreasing temperatures.

4. Method according to any of claims 1 to 3,
**characterised in that**
an ageing state of the oxidising converter (6) and/or the SCR converter (8) is determined and the first and/or the second and/or the third characteristic temperature value (T1, T1', T2, T2', T3, T3') is/are changed as a function of the respectively determined ageing state.

5. Method according to any of claims 1 to 4,
**characterised in that**
for heating the oxidising converter (6) and/or the SCR converter (8), a first heating power (P1) is released at the oxidising converter (6) as a result of the operation of the heating element, a second heating power (P2) depending on the set injection parameters is released as a result of a late displacement of fuel combusted in the combustion chambers of the internal combustion engine and a third heating power (P3) is released as a result of a post-combustion of incompletely combusted fuel discharged from the internal combustion engine, wherein a relative share of a respective heating power (P1, P2, P3) in a total heating power (P_{Heiz, gesamt}) is set as a function of the detected temperature values and the first characteristic temperature value (T1, T1') and/or the second characteristic temperature value (T2, T2') and/or the third characteristic temperature value (T3, T3').

6. Method according to claim 5,
**characterised in that**
the total heating power (P_{Heiz, gesamt}) is applied by the first heating power (P1) and the second heating power (P2) only if temperature values below the first characteristic temperature value (T1, T1') are detected for the current temperature of the oxidising converter (6).

7. Method according to claim 5 or 6,
**characterised in that**
approximately 50% are set as relative share of the first heating power (P1) if temperature values below the first characteristic temperature value (T1, T1') are detected for the current temperature of the oxidising converter (6).

8. Method according to any of claims 5 to 7,
**characterised in that**
less than approximately 30% are set as relative share of the first heating power (P1) if temperature values above the first characteristic temperature value (T1, T1') are detected for the current temperature of the oxidising converter (6) and temperature values below the third characteristic temperature value (T3, T3') are detected for the current temperature of the SCR converter (8).

9. Method according to any of claims 5 to 8,
**characterised in that**
if temperature values below the first characteristic temperature value (T1, T1') are detected for the current temperature of the oxidising converter (6) are detected, the total heating power (P_{Heiz, gesamt}) is set lower than if temperature values above the second characteristic temperature value (T2, T2') are detected for the oxidising converter (6) and if temperature values below the third characteristic temperature value (T3, T3') are detected for the SCR converter (8).

## Revendications

1. Procédé de régulation de la température d'un dispositif de post-traitement des gaz d'échappement (1) raccordé à un moteur à combustion interne comprenant un élément chauffant électrique (5), un catalyseur d'oxydation (6) raccordé en aval de l'élément chauffant (5) et un réducteur catalytique sélectif raccordé en aval du catalyseur d'oxydation (6),
- les valeurs de température pour une température réelle du catalyseur d'oxydation (6) et du réducteur catalytique sélectif (8) étant déterminées en continu,
- en fonction des valeurs de température déterminées, les paramètres des processus d'injection de carburant dans les chambres de combustion du moteur à combustion interne et une capacité de chauffage (P1) de l'élément chauffant (5) étant réglés,
- une valeur de température caractéristique associée respectivement à un seuil de conversion prédéfini étant associée au catalyseur d'oxydation (6) et au réducteur catalytique sélectif (8), **caractérisé en ce qu'**une première valeur de température caractéristique (T1, T1') étant associée au catalyseur d'oxydation (6) pour une conversion oxydative du monoxyde de carbone et une deuxième valeur de température (T2, T2') pour une conversion oxydative des hydrocarbures et une troisième valeur de température caractéristique (T3, T3') pour une conversion de NOx réductrice étant associée au réducteur catalytique sélectif, lorsque la première et la deuxième valeur de température caractéristique (T1, T1', T2, T2') sont atteintes pour la température du catalyseur d'oxydation (6) et lorsque la troisième valeur de température caractéristique (T3, T3') pour la température du réducteur catalytique sélectif (6) est atteinte, des valeurs différentes respectives pour les paramètres d'injection et/ou de capacité de chauffage (P1) étant réglées.

2. Procédé selon la revendication 1, **caractérisé en ce que** pour la première valeur de température caractéristique (T1, T1') est prévue une valeur inférieure à celle pour la deuxième valeur de température caractéristique (T2, T2').

3. Procédé selon la revendication 1 ou la revendication 2, **caractérisé en ce que** pour la première valeur de température caractéristique (T1, T1') et/ou pour la deuxième valeur de température caractéristique (T2, T2') et/ou pour la troisième valeur de température caractéristique (T3, T3') respectivement pour des températures croissantes des valeurs supérieures à celles pour des températures décroissantes sont prévues.

4. Procédé selon l'une quelconque des revendications 1 à 3, **caractérisé en ce qu'**un état de vieillissement du catalyseur d'oxydation (6) et/ou du réducteur catalytique sélectif (8) est déterminé et la première et/ou la deuxième et/ou la troisième valeur de température caractéristique (T1, T1', T2, T2', T3, T3') sont modifiées en fonction de l'état de vieillissement respectif déterminé.

5. Procédé selon l'une quelconque des revendications 1 à 4, **caractérisé en ce que** pour chauffer le catalyseur d'oxydation (6) et/ou le réducteur catalytique sélectif (8) une première capacité de chauffage (P1) à la suite d'un fonctionnement de l'élément de chauffage, en fonction des paramètres d'injection réglés, une deuxième capacité de chauffage (P2) à la suite d'un stockage tardif du carburant enflammé dans les chambres de combustion du moteur à combustion interne et une troisième capacité de chauffage (P3) à la suite d'une post-combustion du carburant distribué par le moteur à combustion interne qui n'a pas été entièrement enflammé au niveau du catalyseur d'oxydation (6) sont libérées, une partie relative d'une capacité de chauffage (P1, P2, P3) de la capacité de chauffage totale (P_{Heiz, gesamt}) déterminée par les capacités de chauffage libérées ((P1, P2, P3) est réglée en fonction des valeurs de température déterminées et de la première valeur de température caractéristique (T1, T1') et/ou de la deuxième valeur de température caractéristique (T2, T2') et/ou de la troisième valeur de température caractéristique (T3, T3').

6. Procédé selon la revendication 5, **caractérisé en ce que** la capacité de chauffage totale (P_{Heiz, gesamt}) est uniquement appliquée par la première capacité de chauffage (P1) et la deuxième capacité de chauffage (P2) lorsque pour la température réelle du catalyseur d'oxydation (6) les valeurs de température sont déterminées en dessous de la première valeur de température caractéristique (T1, T1').

7. Procédé selon la revendication 5 ou la revendication 6, **caractérisé en ce qu'**environ 50 % est réglé en tant que partie relative de la première capacité de chauffage (P1) lorsque pour la température réelle du catalyseur d'oxydation (6) les valeurs de température sont déterminées en dessous de la première valeur de température caractéristique (T1, T1 ').

8. Procédé selon l'une quelconque des revendications 5 à 7, **caractérisé en ce qu'**il est réglé moins qu'environ 30 % en tant que partie relative de la première capacité de chauffage (P1) lorsque pour la température réelle du catalyseur d'oxydation (6) des valeurs de température sont déterminées au-dessus de la première valeur de température caractéristique (T1, T1') et pour la température actuelle du réducteur catalytique sélectif (8) des valeurs de température sont déterminées en dessous de la troisième valeur de température caractéristique (T3, T3').

9. Procédé selon l'une quelconque des revendications 5 à 8, **caractérisé en ce que** pour des valeurs de température déterminées en dessous de la première valeur de température caractéristique (T1, T1') pour la température réelle du catalyseur d'oxydation (6) la capacité de chaleur totale (P_{Heiz, gesamt}) est réglée en dessous de celle pour des valeurs de température déterminées pour le catalyseur d'oxydation (6) au-dessus de la deuxième valeur de température caractéristique (T2, T2') et pour les valeurs de température déterminées pour le réducteur catalytique sélectif (8) en dessous de la troisième valeur de température caractéristique (T3, T3').
